# EUROPÄISCHE PATENTANMELDUNG

(11) **EP 0 958 897 A1**
(43) Veröffentlichungstag der Anmeldung: **24.11.1999**
(21) Anmeldenummer: 99107598.7
(22) Anmeldetag: 16.04.1999
(51) Int. Cl.: B25J 9/16, G09F 27/00

(54) **Computerisiertes System für Empfang und Information von Besuchern**

(30) Priorität: 20.04.1998 DE 19817602
(71) Anmelder: Landert, Heinrich, 8180 Bülach (CH)
(72) Erfinder: Landert, Heinrich, 8180 Bülach (CH)
(74) Vertreter: Riebling, Peter, Dr.-Ing.

(57) **Zusammenfassung**

Computerisiertes System für Empfang und Information von Besuchern mit mindestens einem mehrachsig programm- und sensorgesteuertem Roboter in Wirkungs- Verbindung mit mindestens einer bemannten Leitstelle.

## Beschreibung

Zur Informationsvermittlung an Besucher, beispielsweise im Eingangsbereich von Gebäuden, an Ausstellungen etc. werden die verschiedensten Mittel wie Anschlagbretter, Bildschirme, Informationssysteme, Hostessen etc. eingesetzt, die alle mit gewissen Nachteilen verbunden sind. Hostessen beispielsweise sind einerseits kostenintensiv, bei unregelmässigem oder schwachem Verkehr schlecht ausgelastet, auf die Dauer gelangweilt durch die Beantwortung immer wieder gleicher Fragen und belastet durch die nicht optimale, im Extremfall sogar gefährliche Arbeitsumgebung, andererseits in komplexeren Fälllen überfordert durch die grosse Zahl von Sprachen und Sachthemen, in denen bzw. über die kompetente Auskünkfte verlangt werden.

Aufgabe der vorliegenden Erfindung ist es, Empfang und Information von Besucher anhand eines computerisierten Systems zu verbessern und zu automatisieren, sowie Empfangs- und Informationspersonal einzusparen, und nur mehr an einer zentralen Stelle zu beschäftigen, wodurch ein effektiver Arbeitsablauf des Personals erreicht wird.

Die Lösung der Aufgabe erfolgt nach der technischen Lehre des Anspruchs 1. Gemäss der vorliegenden Erfindung werden die eingangs beschriebenen Nachteile behoben durch eine vom nachfolgend beschriebenen System erreichte optimale Aufgabenteilung zwischen der Information suchenden Benutzerin, dem mit ihr in direktem Kontakt tretenden automatischen Gerät, der übergeordneten Kontroll-Infrastruktur und dem beispielsweise auf gewisse Sprachen und/oder Sachgebiete spezialisierten Bedienpersonal von Info-Zentralen, das selektiv nur dann beansprucht wird, wenn individuelle Anforderungen die Möglichkeiten der verfügbaren automatischen Informationsvermittlung übersteigen.

Eine erste Ausführungsform des erfindungsgemässen Systems wird beispielsweise im Eingangsbereich eines Büro-Gebäudes mit relativ schwachem Besucherverkehr eingesetzt. An Stelle eines bemannten Empfangsdesks oder einer nicht sehr benutzerfreundlichen Info-Tafel oder dergleichen wartet beispielsweise ein freundlich wirkender humanoider Roboter auf Hilfe benötigende Besucher. Eingebaute und/oder fix installierte Sensorik erlaubt ihm beispielweise, zwischen Mitarbeitern, mit beispielsweise berhührlosen Zutritts-Ausweisen, und Besuchern zu unterscheiden. Erstere mit einem personalisierten, randomisierten flotten Spruch zu begrüssen und letzteren mit freundlichen Worten und/oder Gestik und/oder Bildschirmdarstellung seine Hilfe anzubieten und, falls erwünscht auch auf sie zuzugehen bzw. sie zu begleiten. Beispielsweise mittels eines im Roboter eingebauten Touch-Screens kann der Besucher die gewünschte Sprache und Auskunft abrrufen, worauf ihm das Gerät beispielsweise auch den einzuschlagenden Weg weist, bzw. ihn im Extremfall bis zu seinem Ziel geleitet, wobei wenn nötig während dessen Beanspruchung bereitstehende gleichartige Reservegeräte den Empfang weiterhin gewährleisten. Alle diese Funktionen laufen im Normalfall dank der im Gerät und/oder der mit diesem über Draht oder vorzugsweise drahtlos verbundene Leitstelle installierten Hard- und Software vollautomatisch ab.

Der Vorteil dieses Systems liegt darin, daß Empfangs- und Informationspersonal im Eingangsbereich von Behörden, Firmen und anderen Institutionen nicht mehr erforderlich ist.

Findet sich jedoch der Besucher mit der Automatik nicht zurecht und/oder überfordert er diese mit seinen Ansprüchen, so kann er auf einfachste Weise, beispielsweise über den Touch-Screen, menschliche Hilfe anfordern. Beispielsweise sehen und hören sich dann über eine audiovisuelle Duplex-Verbindung Besucherin und eine in einem anderen Raum stationierte Auskunftsperson gegenseitig und sind damit in der Lage, nutzbringend zu kommunizieren. Falls erwünscht, ist die Auskunfts- oder eine weitere Person auch in der Lage, über die eingebaute Fernsteuerung einzelne oder alle Bewegungsaxen des Roboters manuell- ggf. auch mit Automatik-Unterstützung zu steuern und damit beispielsweise den Besucher auf Orte hinzuweisen oder ihn dorthin zu begleiten, die im automatischen Programm nicht vorgesehen sind.

Wesentlich ist dabei, daß im erfindungsgemässen System auch die notwendige Kommunikation mit vorhandenen Aufzügen, Zutrittskontroll-Systemen etc. realisiert werden kann, um beispielsweise dem Besucher in Begleitung eines Roboters Zutritt zu gewissen geschützten Bereichen zu gewährleisten.

Ein weiterer wesentlicher Aspekt ist dabei, daß der Roboter wenn nötig durch entsprechende Signale auch Ausgänge sperren und/oder mit kraftbetätigten Wandelementen, Scherengittern o. dgl. ausgerüstet werden kann, um notfalls unerwünschte Besucher an der Flucht zu hindern. Somit wird auch dem betreffenden Sicherheitsschutz Rechnung getragen.

In einer zweiten Ausführungsform steht das erfindungsgemässe System im Dienste von beispielsweise Ausstellungs- oder Fabrikbesuchern. In diesem Falle ist der Roboter, beispielsweise mittels der von fahrerlosen Transportsytemen FTS her bekannten Technik, auf mindestens einen Rundgang programmiert, ggf. mit durch den Besucher z.B. via Touchscreen wählbaren Varianten. Mittels Ton und/oder Bild bzw. Gestik werden dem Besuchern die notwendigen Erläuterungen in professioneller Form präsentiert. Wichtig ist dabei, daß auch hier auf Wunsch menschliche Assistenz beispielsweise auf die oben beschriebene Art beansprucht werden kann. Falls erwünscht, kann das Gerät auch mit Sitzgelegenheiten für Besucher ausgerüstet werden, um den Rundgang komfortabler zu gestalten. Der Vorteil dieser Ausführungsform liegt darin, daß kein zusätzliches Personal benötigt wird, um diese Aufgaben zu übernehmen.

Eine dritte Ausführungsform ist beispielsweise für eine größere Ausstellung entwickelt. Eine Vielzahl von ortsfesten und/oder bewegelichen Robotern ist nach Bedarf über das Ausstellungsgelände verteilt und über Kommunikations-Systeme mit mindestens einer bemannten Leitstelle verbunden. Auch hier kann im Normalfall ein Großteil der Funktionen unter Kontrolle der im System dezentral und/oder zentral verfügbaren Hard- und Software vollautomatisch ablaufen. Benutzer und Leitstellen(n) sind aber in der Lage, sich falls erwünscht jederzeit einzuschalten und einzelne Geräte temporär unter manueller oder halbautomatischer Kontrolle zu betreiben, um individuellen Besucher-Ansprüchen bestmöglich zu entsprechen. Daraus ergibt sich der Vorteil, daß durch das Zuschalten sprachlich und/oder fachtechnisch auf den einzelnen Fall optimal vorbereiteter Personen aus dem Mitarbeiter-Pool der Leitstelle(n) trotz der viel kleineren Belegschaft eine Qualität der Informations-Vermittlung möglich wird, die niemals erreicht werden könnte, auch wenn jeder Roboter durch eine menschliche Auskunftsperson ersetzt würde. Ein weiterer Vorteil besteht darin, daß durch Kombination der in den Beispielen beschriebenen Funktionen die Erfindung vielfältigen weiteren Bedarfsfälllen optimal angepasst werden kann.

Anhand der nachfolgenden Zeichnungen werden Ausführungsformen des computerisierten Systems für Empfang und Information von Besuchern dargestellt.

### Es zeigen:

- Figur 1:: Einen mehrachsig programm- und sensorgesteuerten Roboter
- Figur 2:: Einen mehrachsig programm- und sensorgesteuerten Roboter mit Sitzgelegenheit
- Figur 3:: Mehrere ortsfeste oder bewegliche Roboter die von einer Zentrale aus gesteuert werden

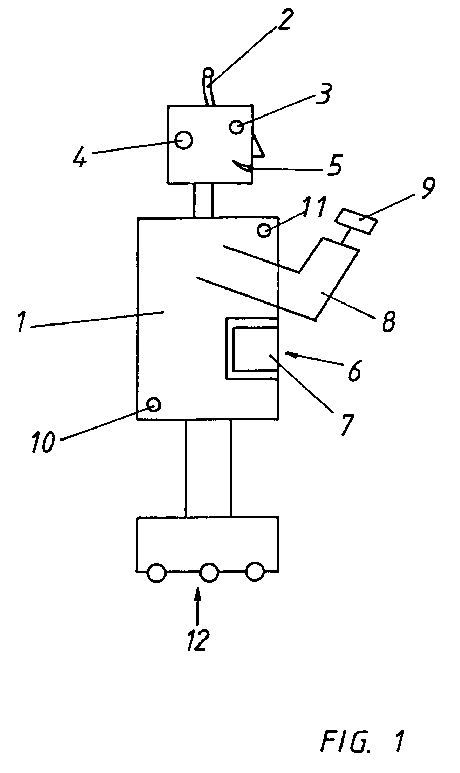

In Figur 1 wird eine Ausführungsform des computerisierten Systems für Empfang und Information von Besuchern dargestellt. Dabei handelt es sich um einen beweglichen Roboter 1 der eine Sende- und Empfangseinheit 2, eine Videokamera 3, ein Mikrofon 4, einen Lautsprecher 5, einen Bildschirm 6, mit einem Touch-Screen 7, einem Arm 8, einem Vielfachwerkzeug 9, einem Sensor 10, einem Erkennungssystem 11, sowie ein Fahrwerk 12 beinhaltet. Anhand des Erkennungssystems 11 kann der Roboter erkennen, ob eine auf ihn zukommende Person ein Mitarbeiter mit einem speziellen berührungslosen Ausweis ist, oder ob es sich um einen Besucher handelt. Die Sensoren 10 werden zur Positionsbestimmung eingesetzt. Die Videokamera 3, das Mikrofon 4, der Lautsprecher 5 und der Bildschirm 6 mit dem Touch-Screen 7 dienen zur Kommunikation mit dem Besucher. Über den Bildschirm 6 werden dem Besucher Daten oder Informationen angezeigt, die ihm Auskunft über die Bedienung des Roboters sowie Wegbeschreibungen und sonstige für den Besucher wichtige Informationen geben. Dieses visuelle Informationssystem wird durch Lautsprecher 5 akustisch ergänzt.

Sollte der Besucher mit der Bedienung des Roboters nicht zurecht kommen, so ist eine Möglichkeit vorgesehen, mit einer Zentrale Kontakt aufzunehmen. Die Kontaktaufnahme mit der Zentrale erfolgt über die Sende- und Empfangseinheit 2. Diese stellt drahtlos oder drahtgebunden eine Verbindung mit dem Auskunfts- oder Informationspersonal her. Diese Person kann anhand der Videokamera 3 sowie über das Mikrofon 4 den Lautsprecher 5 und den Bildschirm 6 mit dem Besucher Kontakt aufnehmen und diesen nach seinen Wünschen befragen bzw. ihm die benötigten Auskünfte erteilen.

Aufgrund des Fahrwerks 12 kann der Roboter sowohl automatisch über ein im Roboter integrietes Programm oder auch vom Bedienpersonal gesteuert den Besucher bis an seinen Bestimmungsort begleiten. Zur Orientierung des Roboters dienen dabei die Sensoren 10 sowie die Videokamera 3 und ein dem entsprechendes Steuerprogramm für den Roboter.

Um mechanische Tätigkeiten verrichten zu können ist der Roboter mit einem Vielfachwerkzeug 9 ausgestattet. Dieses Vielfachwerkzeug 9 ist in der vorliegenden Ausführungsform vorzugsweise an einem Arm befestigt. Dieser Arm 8 ist schwenkbar und drehbar am Roboter 1 montiert.

Zusätzlich ist der Roboter 1 mit dem jeweiligen Sicherheitssystem der gegebenen Örtlichkeiten integrierbar. Somit ist es möglich, Türschließanlagen und entsprechend ausgestattete Sicherheitsbereiche mit dem Roboter zu öffnen, bzw. wieder zu schließen. Dadurch kann der Besucher entsprechende Wege passieren ohne das Auskunfts- oder Informationspersonal den Besucher begleiten muß.Daraus ergibt sich der Vorteil, daß in schwach frequentierten Bereichen kein Personal abgestellt werden muß, daß die meiste Zeit nur darauf wartet, bis jemand kommt, der seine Hilfe benötigt.

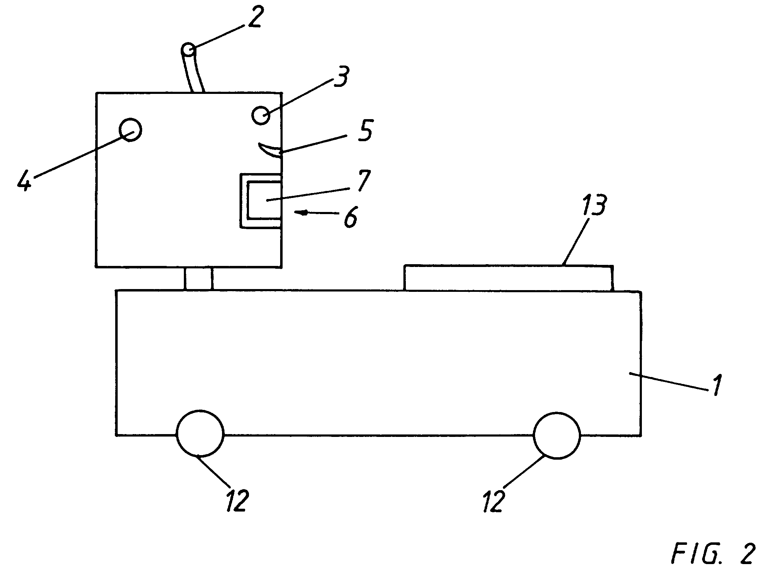

Figur 2 zeigt einen weiteren Roboter, der mit einer Sitzgelegenheit ausgestattet ist. Durch die Ausstattung mit dieser Sitzgelegenheit ist es möglich, den Besucher sicher und bequem über große Distanzen zu führen. Dabei kann der Besucher, je nach Wunsch, mit dem Computer oder bei speziellen Fragen auch mit dem Bedien- oder Auskunftspersonal Kontakt aufnehmen. Somit ist gewährleistet, daß der Besucher jederzeit Informationen zu seinen Fragen erhält. Der Vorteil dieser Ausführungsform liegt darin, daß der Besucher bequem sitzend bis zu seinem Ziel geleitet wird.

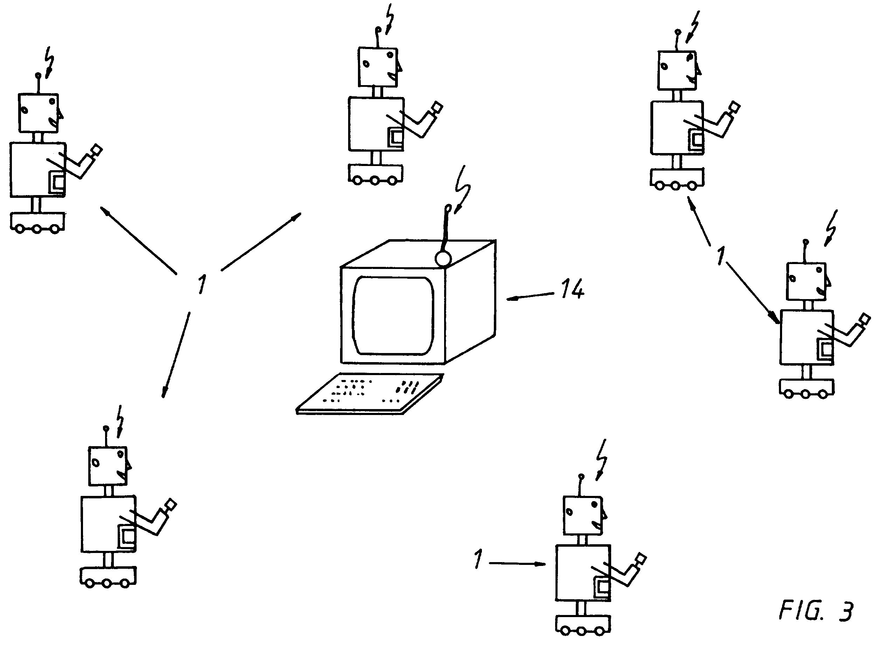

In Figur 3 ist die Leitzentrale 14 dargestellt, die über Funkverbindung mit verschiedenen Robotern 1 in Verbindung steht. Diese komplexe Ausführungsform der vorliegenden Erfindung ist z.B. für ein großes Ausstellungsgelände gedacht, an dem verteilte Komunikationssysteme die mit einer bemannten Leitstelle verbunden sind, eingesetzt werden. Auch bei dieser Ausführungsform kann ein Großteil der Funktionen direkt mit dem Roboter 1 ausgeführt werden.

Die Kontrolle des Systems ist dezentral oder zentral über verfügbare Hard- und Software realisiert, so daß ein vollautomatischer Ablauf gewährleistet ist. Sowohl der Besucher als auch das Bedienpersonal an der Leitstelle sind aber in der Lage direkt über Videokamera und Bildschirm miteinander Kontakt aufzunehmen. Die akustische Verbindung geschieht dabei über Mikrofon und Lautsprecher.

In dieser Ausführungsform ist es vorgesehen, daß auch nicht bewegliche Roboter 1 an festen Standorten eingesetzt werden. Der Einsatz dieser nicht beweglichen Robotern ist zusätzlich zu den beweglichen Robotern 1 vorgesehen. Dieser zusätzliche Einsatz von nicht beweglichen Robotern 1 ist aus dem Grunde vorgesehen, da es Stellen gibt, an denen Information kontinuierlich abgefragt wird. Dazu ist es nicht notwendig einen beweglichen Roboter 1 einzusetzen, sondern es reicht aus, wenn ein fest montierter Roboter 1 instaliert ist. Die Kommunikation mit dem Besucher erfolgt wie auch bei den beweglichen Robotern über die zuvor genannten Medien. Der Vorteil dieses Einsatzes von nicht beweglichen Robotern liegt darin, daß keine Antriebseinheiten und dementsprechend mit geringerem Aufwand ausgestatte Steuereinheiten notwendig sind.

### Zeichnungslegende

- 1: Roboter
- 2: Sende- und Empfangseinheit
- 3: Videokamera
- 4: Mikrofon
- 5: Lautsprecher
- 6: Bildschirm
- 7: Touch-Screen
- 8: Arm
- 9: Vielfachwerkzeug
- 10: Sensor
- 11: Erkennungssystem
- 12: Fahrwerk
- 13: Sitzmöglichkeit
- 14: Zentrale

## Patentansprüche

1. Computerisiertes System für Empfang und Information von Besuchern, **dadurch gekennzeichnet**, daß das System mindestens einen mehrachsig programm- und sensor-gesteuerten Roboter (1) in Wirkungs-Verbindung mit mindestens einer bemannten Leitstelle umfasst.

2. System nach Anspruch 1 **dadurch gekennzeichnet**, daß der Roboter seine Funktionen solange vollautomatisch wahrnimmt, bis Besucher oder das Personal der Leitstelle die Übernahme der Kontrolle des Roboters (1) durch entsprechende Bedienung veranlassen.

3. System nach Anspruch 1 **dadurch gekennzeichnet**, daß Roboter (1) und Leitstelle(n) räumlich getrennt und über ein drahtgebundenes Kommunikations-System miteinander verbunden sind.

4. System nach Anspruch 1 **dadurch gekennzeichnet**, daß Roboter (1) und Leitstelle(n) räumlich getrennt und über ein drahtloses Kommunikations-System miteinander verbunden sind.

5. System nach Anspruch 1 **dadurch gekennzeichnet**, daß der Roboter (1) sowohl mit eingebauter Sensorik (10) ausgerüstet ist wi mit in seinem Arbeitsbereich fix installierter Sensorik kommuniziert.

6. System nach Anspruch 1 **dadurch gekennzeichnet**, daß mindestens 2 Roboter (1) direkt oder über die Leitstelle miteinander kommunizieren und Daten wie Sensorik-Daten oder Auswertungsergebnisse austauschen.

7. System nach Anspruch 1 **dadurch gekennzeichnet**, daß mindestens 1 Roboter (1) mit mindestens je einem Lautsprecher (5) und Mikrofon (4) ausgerüstet ist.

8. System nach Anspruch 1 **dadurch gekennzeichnet**, daß mindestens 1 Roboter (1) mit mindestens einem Bildschirm (6) ausgerüstet ist.

9. System nach Anspruch 1 **dadurch gekennzeichnet**, daß mindestens 1 Roboter (1) mit mindestens einer dem Besucher leicht zugänglichen Eingabevorrichtung, beispielsweise einem Touch-Screen (7) ausgerüstet ist.

10. System nach Anspruch 1 **dadurch gekennzeichnet**, daß mitdestens 1 Roboter (1) mit einem Fahrwerk (12) ausgerüstet ist.

11. System nach Anspruch 1 **dadurch gekennzeichnet**, daß mindestens 1 Roboter (1) mit mindestens einer Video-Kamera ausgerüstetn ist, deren Blickrichtung und Zoom sowohl vom eigenen wie vom Programm der Leitstelle(n) wie von deren Personal gesteuert werden können.

12. System nach Ansprüchen 1 und 2 **dadurch gekennzeichnet**, daß dieses Kommunikationssystem eine Audio Video Verbindung in beiden Richtungen zwischen Leitstelle(n) und Roboter(n) (1) sowie die Steuerung mindestens einzelner Roboterachsen durch Software und/oder Personal der Leitstelle(n) erlaubt.

13. System nach Ansprüchen 1 und 10 **dadurch gekennzeichnet**, daß dieses Fahrwerk analog einem bekannten fahrerlosen Transportsystem FTS eine Steuerung beinhaltet, die es erlaubt, einer Spur zu folgen, Abzweigungen zu befahren, Haltestellen zu bedienen etc.

14. System nach Anspruch 1 **dadurch gekennzeichnet**, daß mindestens eine Bewegungsaxe die teleskopische Verkleinerung oder Vergrößerung des Roboters erlaubt, um den Transport zu erleichtern.

15. System nach Anspruch 1 **dadurch gekennzeichnet**, daß mindestens eine Bewegungsachse derart ausgestaltet ist, um bei Betätigung einem unerwünschen Besucher die Flucht erschweren bzw. verhindern zu können.
